# DEMANDE DE BREVET EUROPEEN

(11) **EP 2 998 148 A1**
(43) Date de publication de la demande: **23.03.2016**
(21) Numéro de dépôt: 15181806.9
(22) Date de dépôt: 20.08.2015
(51) Int. Cl.: B60L 5/02, B60L 5/24, H02G 7/16

(54) **ENSEMBLE COMPORTANT UN PANTOGRAPHE POUR VÉHICULE FERROVIAIRE ET DES MOYENS DE GÉNÉRATION DE MICRO-ONDES ET PROCÉDÉ DE DÉGIVRAGE**

(30) Priorité: 19.09.2014 FR 1458852
(71) Demandeur: Société Nationale des Chemins de Fer Français - SNCF, 93200 St Denis (FR)
(72) Inventeur: GOERES, David, 72000 LE MANS (FR); MICHEL, Loïc, 54400 COSNES ET ROMAIN (FR); AUDITEAU, Gérard, 92140 CLAMART (FR)
(74) Mandataire: Argyma

(57) **Abrégé**

Un ensemble d'un pantographe (1) comportant un cadre (2), destiné à être monté à un véhicule ferroviaire (10), et un archet (3), monté sur ledit cadre (2), comportant au moins une bande de frottement (5) adaptée pour capter un courant d'alimentation d'une caténaire (120), ensemble comportant des moyens de génération de micro-ondes (8) configurés pour dégivrer la bande de frottement (5).

## Description

### DOMAINE TECHNIQUE GENERAL ET ART ANTERIEUR

La présente invention concerne le domaine des véhicules ferroviaires tels que les trains ou les tramways et, plus particulièrement, l'alimentation électrique de tels véhicules ferroviaires. De manière ordinaire, un véhicule ferroviaire comporte un pantographe adapté pour capter un courant d'alimentation circulant dans une caténaire disposée en hauteur au-dessus d'une voie ferroviaire sur laquelle circule ledit véhicule ferroviaire. De manière connue, une caténaire comprend un câble porteur horizontal sur lequel est suspendu horizontalement un fil de contact dans lequel circule un courant électrique. Après captage par le véhicule ferroviaire, le courant électrique est conduit par les rails de la voie ferroviaire vers des équipements au sol. Par la suite, le circuit de circulation du courant est désigné « circuit de voie ».

De manière connue, en particulier par la demande de brevet FR2974335 de la SOCIETE NATIONALE DES CHEMINS DE FER SNCF, un pantographe de véhicule ferroviaire comporte une partie inférieure, connue de l'homme du métier sous la désignation de grand cadre, dont la base est reliée au toit du véhicule ferroviaire et une partie supérieure, connue de l'homme du métier sous la désignation d'archet, qui est montée sur la tête du cadre et qui est destinée à venir en contact avec la caténaire.

Le pantographe comporte de manière classique une suspension pneumatique permettant le dépliement et le repliement du cadre sur le toit du véhicule ferroviaire. Ainsi, le pantographe peut se lever ou descendre en fonction des besoins.
L'archet comporte une ou plusieurs bandes de frottement destinées à entrer en contact avec le fil de contact. Chaque bande de frottement est réalisée dans un matériau conducteur de courant.

Lors de la mise en service d'un véhicule ferroviaire, le conducteur lève le pantographe pour mettre en contact les bandes de frottement avec la caténaire afin d'alimenter le véhicule ferroviaire.

En période hivernale, en raison du givre ou des pluies de verglas, une enveloppe de glace peut se former sur la caténaire et sur les bandes de frottement de l'archet.

Une telle enveloppe de glace dégrade la liaison électrique, voire l'empêche dans des situations extrêmes. Il en résulte que le captage électrique est de mauvaise qualité.

En pratique, l'enveloppe de glace empêche le contact physique entre les bandes de frottements et la caténaire qui demeurent écartées. Aussi, un arc électrique se crée entre les bandes de frottements et la caténaire pour établir la liaison électrique.
Tant que l'enveloppe de glace n'est pas fondue, l'arc électrique demeure entre les bandes de frottements et la caténaire. Du fait de la présence de l'arc électrique, le courant et la tension sont fortement déformés dans le circuit de voie. Il en résulte que les normes électriques des différents circuits de voie (par exemple, les circuits de voie 100Hz en Allemagne ou 50Hz en Belgique) ne sont plus respectées. En outre, les bandes de frottement de la caténaire sont également dégradées par l'arc électrique.

Il a été présenté dans l'art antérieur plusieurs solutions pour éliminer l'enveloppe de glace recouvrant les bandes de frottement d'un pantographe.

Une première solution connue consiste à déplacer le pantographe de manière répétée entre sa position basse et sa position haute de contact avec la caténaire afin que les chocs répétés entre le pantographe et la caténaire puissent briser l'enveloppe de glace formée sur les bandes de frottement. En pratique, cette méthode ne permet d'éliminer l'enveloppe de glace que sur une zone très réduite des bandes de frottement. Aussi, au cours du déplacement du véhicule ferroviaire, un arc électrique peut être généré si la caténaire entre en contact avec une zone non dégivrée des bandes de frottement. Une telle solution n'est donc pas satisfaisante.

Une deuxième solution connue pour pallier ce problème consiste à laisser les véhicules ferroviaires en permanence sous tension électrique, c'est-à-dire en maintien de service, afin de conserver un courant dans la caténaire et les bandes de frottement du pantographe. La chaleur générée par effet Joule dans ces composants - du fait de leur résistance électrique intrinsèque - permet d'éviter la formation d'une enveloppe de glace. Cette dernière solution présente l'inconvénient d'être énergivore et donc coûteuse puisqu'elle contraint d'alimenter les véhicules ferroviaires lorsque ceux-ci sont en stationnement.

Une troisième solution consiste à utiliser un système de chauffage, dit « par traçage», des bandes de frottement du pantographe. En pratique, un fil électrique résistif est placé dans la bande de frottement puis le fil électrique résistif est alimenté de manière à générer de la chaleur par effet Joule et faire fondre l'enveloppe de glace recouvrant la bande de frottement. Autrement dit, le système de chauffage est intégré dans la bande de frottement.

Un chauffage par traçage présente l'inconvénient d'être complexe et coûteux à mettre en oeuvre. En pratique, le fil résistif est alimenté par un convertisseur électrique du véhicule ferroviaire tandis que la bande de frottement est en contact électrique avec la caténaire. Autrement dit, le fil résistif et la bande de frottement ne sont pas au même potentiel électrique et il est nécessaire d'isoler électriquement le fil résistif afin d'éviter l'apparition d'arcs électriques. A cet effet, le fil résistif comporte une gaine isolante qui pénalise sa section, son volume et par conséquent son poids. L'intégration d'un système de chauffage par traçage dans une bande de frottement pénalise le poids de la bande de frottement, ce qui dégrade les performances de captage du pantographe à haute vitesse.

Par ailleurs, l'intégration d'un système de chauffage par traçage dans une bande de frottement augmente son coût de fabrication. Cet inconvénient est d'autant plus préjudiciable que les bandes de frottement sont des éléments « consommables » qui peuvent être remplacés plusieurs fois par an. Aussi, l'utilisation d'un système de chauffage par traçage présente un coût de maintenance important.

L'invention a donc pour but de remédier à ces inconvénients en proposant un pantographe apte à éliminer efficacement une enveloppe de glace formée sur ses bandes de frottement tout en possédant des performances de captage de courant optimales et un coût de maintenance réduit.

### PRESENTATION GENERALE DE L'INVENTION

A cet effet, l'invention concerne un ensemble d'un pantographe comportant un cadre, destiné à être monté à un véhicule ferroviaire, et un archet, monté sur ledit cadre, comportant au moins une bande de frottement adaptée pour capter un courant d'alimentation d'une caténaire.

L'ensemble de pantographe selon l'invention est remarquable par le fait qu'il comporte des moyens de génération de micro-ondes configurés pour dégivrer la bande de frottement à la manière d'un four micro-ondes.

De manière avantageuse, un dégivrage par micro-ondes permet de ne pas affecter la structure de la bande de frottement et il n'est pas nécessaire de recourir à une bande de frottement spécifique, ce qui diminue les coûts de maintenance. De manière avantageuse, le pantographe et ses éléments (archet, cadre) ne sont pas modifiés par comparaison à l'art antérieur. Aussi, il suffit d'équiper des pantographes existants avec des moyens de génération de micro-ondes pour permettre un dégivrage.

En outre, le chauffage de l'élément magnétique par micro-ondes, c'est-à-dire, sans liaison électrique directe, permet d'éviter tout risque de formation d'un arc électrique, ce qui améliore la sécurité et la durée de vie du pantographe. De plus, l'archet possède un poids similaire à un archet d'un pantographe selon l'art antérieur. Les performances de captage du pantographe à haute vitesse ne sont donc pas affectées. Enfin, un chauffage par micro-ondes permet une montée en température rapide ce qui favorise la fonte du givre et la séparation de l'enveloppe de givre de la bande de frottement.

De préférence, les moyens de génération de micro-ondes comportent au moins un module de génération adapté pour émettre des micro-ondes selon une zone d'émission dans laquelle est située ladite bande de frottement. Avantageusement, la fréquence des micro-ondes est adaptée pour exciter les particules d'eau du givre. De manière préférée, elle est comprise entre 2 GHz et 3 GHz, de préférence, égale à 2,45 GHz afin de faciliter la disparition du givre.

De préférence, ledit ensemble comporte des moyens d'absorption de micro-ondes disposés en regard des moyens de génération de micro-ondes afin d'empêcher les micro-ondes d'interagir avec des équipements situés au voisinage du pantographe.

Selon un aspect, les moyens d'absorption comportent un écran d'absorption, de préférence, relié électriquement à une masse électrique, c'est-à-dire, à un potentiel électrique neutre. Ainsi, l'écran d'absorption forme une barrière limitant la propagation des micro-ondes.

Selon un autre aspect, les moyens d'absorption comportent un module d'absorption bobiné configuré pour mesurer les micro-ondes reçues par ladite bande de frottement. De préférence, les moyens de génération de micro-ondes sont configurés pour adapter la puissance des micro-ondes générées en fonction des mesures réalisées par les moyens d'absorption.

De manière préférée, les moyens de génération de micro-ondes comportent au moins un module d'alimentation et un transformateur d'isolation monté électriquement entre le module de génération et le module d'alimentation. Ainsi, le module de génération est avantageusement découpler électriquement du module d'alimentation, ce qui améliore la sécurité.

Selon un aspect, le pantographe comportant au moins un dispositif d'isolation adapté pour être fixé à un véhicule ferroviaire, le transformateur d'isolation est monté dans ledit dispositif d'isolation. Ainsi, le module de génération est découplé électriquement du véhicule ferroviaire.

De préférence, le cadre comportant une base et un bras mobile sur lequel est monté l'archet, le module de génération est monté sur la base du cadre du pantographe afin de ne pas affecter son comportement dynamique. De préférence encore, le module de génération s'étend à une hauteur verticale correspondant à une position basse du pantographe afin de dégivrer sa bande de frottement.

De manière alternative, le module de génération est monté sur le bras mobile du cadre du pantographe afin de dégivrer sa bande de frottement indépendamment de la position haute ou basse du pantographe.

L'invention concerne également un procédé de dégivrage d'un pantographe comportant un cadre monté à un véhicule ferroviaire et un archet, monté sur ledit cadre, comportant au moins une bande de frottement adaptée pour capter un courant d'alimentation d'une caténaire, le procédé comportant une étape de génération de micro-ondes vers la bande de frottement afin de la dégivrer.

De préférence, le procédé de dégivrage est mis en oeuvre avant la montée du pantographe pour capter le courant d'alimentation de la caténaire. Un tel procédé est mis en oeuvre de manière préliminaire à la conduite, ce qui limite la consommation d'énergie du véhicule et permet des conditions de captage optimales lors de la conduite.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un véhicule ferroviaire avec un pantographe lors de sa circulation sur une voie ferroviaire ;
- la figure 2 est une représentation schématique en coupe longitudinale d'un pantographe comportant un module de génération de micro-ondes disposé longitudinalement ;
- la figure 3 est une représentation schématique de dessus du pantographe de la figure 2 ;
- la figure 4 est une représentation schématique de dessus d'un pantographe comportant un module de génération de micro-ondes disposé latéralement ;
- la figure 5 est une représentation schématique d'un module de génération de micro-ondes pour dégivrer deux pantographes consécutifs ;
- la figure 6 est une représentation schématique de deux modules de génération de micro-ondes pour dégivrer deux pantographes consécutifs ; et
- la figure 7 est une représentation schématique en coupe longitudinale d'un pantographe selon une autre forme de réalisation de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

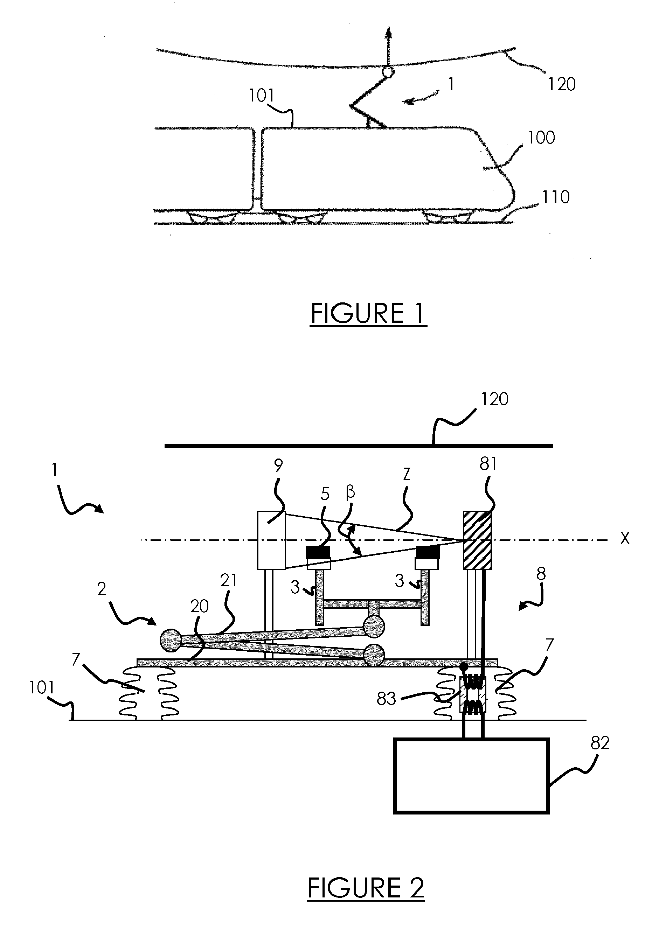

En référence à la figure 1, il est représenté un véhicule ferroviaire 100 circulant sur une voie ferroviaire 110 au-dessus de laquelle s'étend une caténaire 120 dans laquelle circule un courant électrique d'alimentation. Le véhicule ferroviaire 100 comporte un toit 101 sur lequel est monté un pantographe 1 pour capter le courant d'alimentation de la caténaire 120.

En référence à la figure 2, il est représenté une vue schématique en coupe longitudinale du pantographe 1 de la figure 1. De manière connue, le pantographe 1 comporte un cadre 2, monté sur le toit 101 du véhicule ferroviaire 100, et deux archets 3 reliés audit cadre 2. De manière connue, la cadre 2 comporte une base 20 solidaire du toit 101 et un bras mobile 21 reliant l'archet 3 à la base 20. De préférence, le cadre 2 comporte une suspension (non représentée) pour lever ou descendre le bras mobile 21.

Comme illustré à la figure 2, chaque archet 3 comporte dans cet exemple une bande de frottement 5 adaptée pour capter le courant d'alimentation de la caténaire 120. Afin d'isoler électriquement le pantographe 1 du toit 101 du véhicule ferroviaire 100, ce dernier est équipé d'une pluralité de dispositifs d'isolation 7 pour permettre la fixation du pantographe 1. Autrement dit, les dispositifs d'isolation 7 forment une interface isolante entre le pantographe 1 et le toit 101 du véhicule ferroviaire 100. De manière connue, les dispositifs d'isolation 7 sont réalisés en matériaux céramiques ou composites.

Selon l'invention, en référence à la figure 2, le pantographe 1 comporte des moyens de génération de micro-ondes 8 destinés à chauffer les bandes de frottement 5 à la manière d'un four micro-ondes pour permettre leur dégivrage. De tels moyens de génération de micro-ondes 8 sont indépendants des bandes de frottement 5 destinées à entrer en contact avec la caténaire 120, ce qui limite les contraintes d'isolement électrique. Le coût d'un tel pantographe 1 est ainsi limité par comparaison à un pantographe selon l'art antérieur comportant des fils chauffants intégrés dans les bandes de frottement 5. Autrement dit, grâce à l'invention, des bandes de frottement traditionnelles peuvent être utilisées, les moyens de génération de micro-ondes 8 étant rapportés sur le pantographe 1.

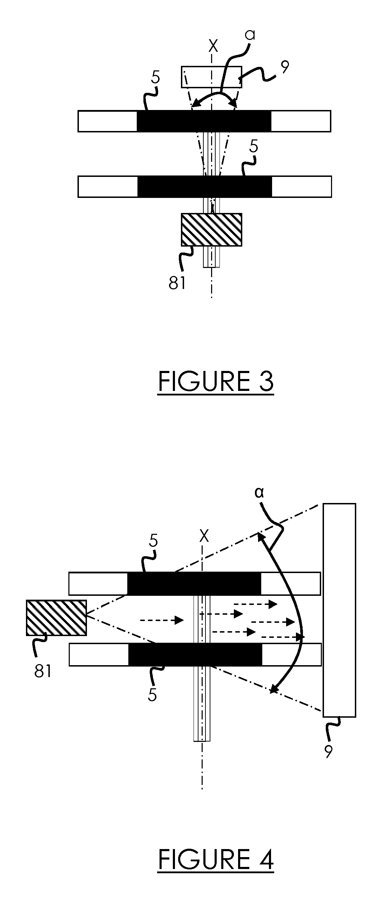

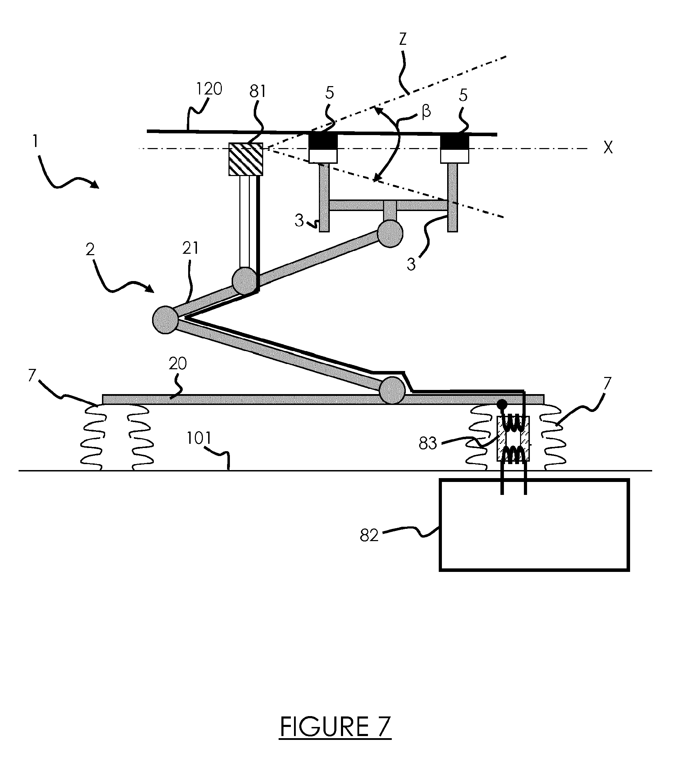

Les moyens de génération de micro-ondes 8 comportent au moins un module de génération 81, de préférence, adapté pour émettre des micro-ondes magnétiques selon une zone d'émission Z dont l'axe d'émission X est prédéterminé. Dans cet exemple, la zone d'émission Z se présente sous la forme d'un volume conique dont l'axe d'émission X correspond à l'axe du cône. Le cône, dont la zone d'émission Z a la forme, possède un angle d'ouverture horizontal a (Figures 3-4) et un angle d'ouverture vertical β (Figures 2 et 7). De manière préférée, l'angle d'ouverture horizontal a est compris entre 0° et 150° afin de pouvoir chauffer une ou plusieurs bandes de frottement 5 comme cela sera présenté par la suite. La valeur de l'angle d'ouverture horizontal a est fonction du nombre de modules de génération 81, de leurs positions par rapport à la bande de frottement 5 et de la longueur des bandes de frottement 5. De préférence encore, l'angle d'ouverture vertical β est compris entre 0° et 45° afin de limiter la dimension verticale des moyens d'absorption comme cela sera présenté par la suite.

Comme illustré à la figure 2, l'axe d'émission X s'étend dans un plan horizontal afin de chauffer la partie supérieure horizontale des bandes de frottement 5. De préférence, le module de génération bobiné est un électro-aimant ou un magnétron. Le module de génération 81 comporte, de préférence, une pluralité de spires jointives adaptées pour générer des micro-ondes en fonction du courant circulant dans lesdites spires. De manière connue, les caractéristiques des micro-ondes sont fonction des dimensions et du nombre de spires du module de génération bobiné.

De manière préférée, le module de génération 81 émet un champ électromagnétique de micro-ondes dont la fréquence est configurée pour exciter les molécules de glace constituant le givre. De préférence, la fréquence est comprise entre 2 GHz et 3 GHz, de préférence, égale à 2,45 GHz. L'amplitude de l'excitation des molécules de glace dépend de la puissance du champ électromagnétique rayonné. A cet effet, le module de génération 81 comporte des moyens de réglage de la puissance, par exemple, un convertisseur de puissance. Grâce aux moyens de réglage, on peut réaliser un dégivrage rapide à haute puissance ou un dégivrage à faible puissance sur une longue durée afin de limiter la puissance rayonnée au voisinage du pantographe 1. Le module de génération 81 est placé au plus près des bandes de frottement 5 de manière à maximiser le flux de puissance électromagnétique en diminuant les pertes diélectriques en dehors de la pellicule de glace. De préférence encore, aucun obstacle n'est situé entre le module de génération 81 et les bandes de frottement 5.

De manière avantageuse, l'utilisation de micro-ondes permet de chauffer le givre formé sur les bandes de frottement 5 sans affecter le matériau formant chaque archet. En effet, la fréquence des micro-ondes permet uniquement de chauffer les molécules d'eau du givre par « excitation », les matériaux constitutifs de l'archet n'étant pas chauffés étant donné qu'ils ne comportent pas de molécule d'eau. Un tel phénomène est similaire au chauffage d'un plat de nourriture dans un four micro-ondes, le contenant (la nourriture) étant chauffé étant donné qu'il contient des molécules d'eau tandis que le conteneur (le plat) n'est pas chauffé.

Toujours en référence à la figure 2, les moyens de génération de micro-ondes 8 comportent un module d'alimentation 82 qui se présente, dans cet exemple, sous la forme d'un convertisseur de tension du type hacheur afin de fournir un courant alternatif aux moyens de génération de micro-ondes 8. Le module d'alimentation 82 est lui-même alimenté par une batterie du véhicule ferroviaire. A titre d'exemple, le module d'alimentation 82 découpe la tension de batterie de 72V à une fréquence de découpage de 50 kHz. De manière alternative, le module d'alimentation 82 se présente sous la forme d'un onduleur. De préférence, en référence à la figure 2, le module d'alimentation 82 est monté dans le toit 101 du véhicule ferroviaire 100 tandis que le module de génération 81 est monté sur le cadre 2 du pantographe 1. De manière avantageuse, toute interaction électrique entre le circuit électrique des moyens de génération de micro-ondes 8 et le circuit électrique du pantographe 1 est évitée.

En référence à la figure 2, afin de renforcer l'isolation électrique, les moyens de génération de micro-ondes 8 comportent un transformateur d'isolation 83 monté électriquement entre le module d'alimentation 82 et le module de génération 81. De manière avantageuse, un tel transformateur d'isolation 83 permet de découpler électriquement le module de génération 81 du module d'alimentation 82. De préférence, le transformateur d'isolation 83 est monté dans un dispositif d'isolation 7 du véhicule ferroviaire comme illustré à la figure 2. De manière préférée, le transformateur d'isolation 83 est isolé de manière galvanique. Une telle architecture est avantageuse car elle permet de limiter l'encombrement sur le toit 101 du véhicule ferroviaire 100 toute en garantissant une sécurité optimale.

En référence aux figures 2 et 3, le module de génération 81 est positionné à une extrémité longitudinale du pantographe 1 afin d'émettre des micro-ondes selon la direction longitudinale du véhicule ferroviaire 100, c'est-à-dire, perpendiculairement aux bandes de frottement 5. Un tel positionnement permet de chauffer directement la zone des bandes de frottement 5 destinée à entrer en contact avec la caténaire 120 comme illustré à la figure 3. Dans cet exemple, le module de génération 81 est adapté pour émettre des micro-ondes selon la médiatrice des bandes de frottement 5. Pour un tel positionnement, l'angle conique horizontal a du module de génération 81 est étroit.

De manière alternative, en référence à la figure 4, le module de génération 81 est disposé à une extrémité latérale du pantographe 1. De manière préférée, le module de génération 81 est placé entre les bandes de frottement 5 et est adapté pour émettre des micro-ondes selon une direction latérale, c'est-à-dire parallèlement aux bandes de frottement 5 afin de les réchauffer de manière simultanée. Pour un tel positionnement, l'angle conique horizontal a du module de génération 81 est large.

De manière préférée, en référence aux figures 2 à 4, le pantographe 1 comporte, en regard des moyens de génération de micro-ondes 8, des moyens d'absorption 9 configurés pour limiter la propagation des micro-ondes émises par les moyens de génération de micro-ondes 8. Ainsi, les micro-ondes ne se propagent pas au-delà des moyens d'absorption 9 qui forment ainsi une barrière. De tels moyens d'absorption 9 sont avantageux car ils limitent le paramètre d'action des micro-ondes et limitent leur impact sur les équipements situés au voisinage du pantographe 1.

Selon un premier aspect, les moyens d'absorption 9 se présentent sous la forme d'un écran d'absorption disposé transversalement à l'axe d'émission des micro-ondes X afin de limiter la longueur de la zone d'émission Z. De préférence, l'écran d'absorption est réalisé en matériau métallique et est connecté électriquement à la masse du véhicule ferroviaire, c'est-à-dire, à un potentiel électrique neutre. Ainsi, les micro-ondes sont bloquées dans l'écran d'absorption et dissipées dans le véhicule ferroviaire. Selon un autre aspect, les moyens d'absorption 9 comportent un module d'absorption bobiné adapté pour déterminer, par induction magnétique, la puissance des micro-ondes émises par les moyens de génération 8 tout en limitant leur propagation. Dans cet exemple, le module d'absorption est placé selon l'axe d'émission X où la magnitude du champ électromagnétique mesuré est la plus élevée. De préférence, les moyens de génération de micro-ondes 8 sont asservis en fonction des mesures de la puissance du champ électromagnétique réalisées par le module d'absorption afin d'ajuster au mieux la puissance reçue par les bandes de frottement 5 recouvertes de givre. Un tel asservissement permet, d'une part, de chauffer suffisamment le givre et, d'autre part, de limiter les propagations au voisinage du pantographe 1.

L'utilisation de moyens d'absorption 9 est optionnelle et permet d'améliorer la sécurité des opérateurs et équipement situés au voisinage du pantographe 1.

Dans cet exemple, il a été présenté l'utilisation d'un unique module de génération 81 pour chauffer les bandes de frottement 5 d'un pantographe 1 mais il va de soi que plusieurs modules de génération 81 pourraient être utilisés pour chauffer les bandes de frottement 5 d'un unique pantographe 1 en association avec aucun, un ou plusieurs moyens d'absorption 9.

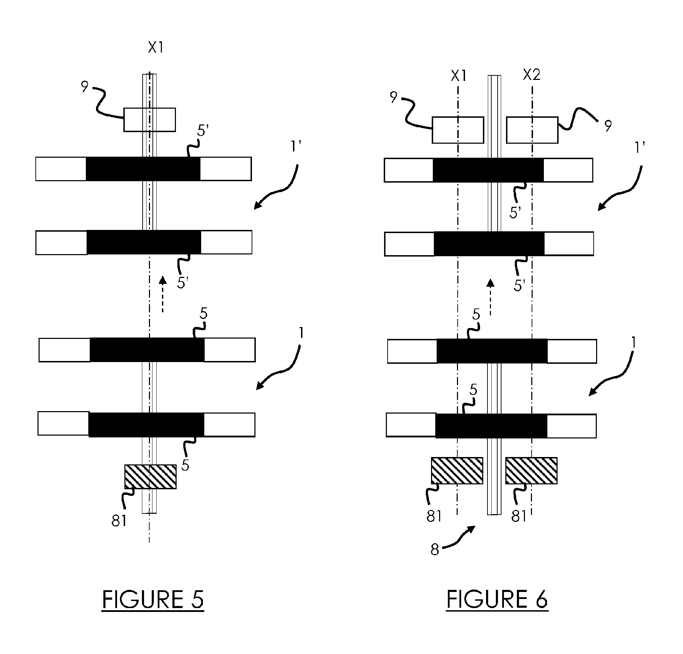

De manière similaire, en référence aux figures 5 et 6, un premier pantographe 1 et un deuxième pantographe l' sont alignés de manière consécutive sur un toit 101 de véhicule ferroviaire 100. Le premier pantographe 1 peut être associé à un ou plusieurs modules de génération 81 pour dégivrer les bandes de frottement 5 du premier pantographe 1 ainsi que les bandes de frottement 5' du deuxième pantographe l'. A cet effet, les modules de génération 81 sont orientés selon l'alignement des deux pantographes 1, l'. En outre, si des moyens d'absorption 9 sont utilisés, ceux-ci sont associés au deuxième pantographe l' afin que les bandes de frottement 5, 5' soient situées entre les moyens de génération 8 et les moyens d'absorption 9. De manière préférée, l'angle conique vertical β des modules de génération 81 est adapté pour viser la partie supérieure des bandes de frottement 5, 5' des deux pantographes l, l' en position basse, ces derniers pouvant être décalés verticalement en position basse.

En référence à la figure 2, le module de génération 81 est fixé à la base 20 du cadre 2 à une hauteur verticale adaptée pour que les parties supérieures des bandes de frottement 5 soient dans la zone d'émission Z lorsque le pantographe 1 est en position basse. Une telle configuration est avantageuse car elle ne perturbe pas le comportement dynamique du pantographe 1, aucune masse n'étant ajoutée au bras mobile 21 du pantographe 1. De manière préférée, pour cette configuration, les moyens d'absorption 9 sont également montés sur la base 20 du cadre 2.

De manière alternative, en référence à la figure 7, le module de génération 81 est fixé au bras mobile 21 du cadre 2 de manière à ce que les bandes de frottement 5 soient dans la zone d'émission Z pour toute position du pantographe 1. Une telle configuration est avantageuse car elle permet de dégivrer également la zone de la caténaire 120 en contact avec les bandes de frottement 5. En outre, les archets 3 du pantographe 1 ne sont avantageusement pas alourdis. De manière préférée, pour cette configuration, les moyens d'absorption 9 sont également montés sur le bras articulé 21 du cadre 2.

De manière alternative encore, le ou les modules de génération 81 et/ou les moyens d'absorption 9 sont fixés sur le toit 101 du véhicule ferroviaire 100 au voisinage du pantographe 1, les équipements participant au dégivrage sont ainsi complétement indépendants du pantographe 1.

Un exemple de mise en oeuvre de l'invention va être maintenant présenté en référence à la figure 2.

Quelques minutes avant le début de la conduite, le conducteur du véhicule ferroviaire 100 observe la présence d'une enveloppe de glace formée par le givre au niveau de la partie supérieure des bandes de frottement 5 du pantographe 1. Pour l'éliminer, le conducteur active le module d'alimentation 82 qui alimente le module de génération 81 via le transformateur d'isolation 83. Le module de génération 81 émet des micro-ondes à une fréquence de l'ordre de 2,45 GHz selon la zone d'émission Z selon l'axe d'émission X dans laquelle sont situés les bandes de frottement 5, lorsque le pantographe 1 est en position descendue. Les micro-ondes excitent les particules de glace constituant le givre pour le faire fondre. De manière avantageuse, la zone d'émission Z est limitée par les moyens d'absorption 9, ici un écran d'absorption, afin d'éviter que des micro-ondes n'atteignent des personnes ou des équipements situés au voisinage du pantographe 1.

Dans cet exemple, le module d'alimentation 82 est activé pendant une durée de l'ordre de 30s afin de dégivrer les deux bandes de frottement 5.

Le conducteur peut ensuite relever le pantographe 1 afin que ce dernier vienne en contact avec la caténaire 120 pour alimenter le véhicule ferroviaire 100. L'enveloppe de glace ayant été éliminée, le captage du courant d'alimentation de la caténaire 120 est réalisé dans des conditions optimales. De préférence, le module d'alimentation 82 est désactivé préalablement à la montée du pantographe 100.

Grâce à l'invention, le dégivrage du pantographe 1 est rapide, efficace et permet un captage optimal du courant de la caténaire 120. En outre, les coûts de maintenance sont avantageusement réduits.

## Revendications

1. Ensemble d'un pantographe (1) comportant un cadre (2), destiné à être monté à un véhicule ferroviaire (10), et un archet (3), monté sur ledit cadre (2), comportant au moins une bande de frottement (5) adaptée pour capter un courant d'alimentation d'une caténaire (120), ensemble **caractérisé par le fait qu'**il comporte des moyens de génération de micro-ondes (8) configurés pour dégivrer la bande de frottement (5).

2. Ensemble selon la revendication 1, dans lequel les moyens de génération de micro-ondes (8) comportent au moins un module de génération (81) adapté pour émettre des micro-ondes (8) selon une zone d'émission (Z) dans laquelle est située ladite bande de frottement (5).

3. Ensemble selon l'une des revendications 1 à 2, comportant des moyens d'absorption de micro-ondes (9) disposés en regard des moyens de génération de micro-ondes (8).

4. Ensemble selon la revendication 3, dans lequel les moyens d'absorption (9) comportent un écran d'absorption, de préférence, relié électriquement à une masse électrique.

5. Ensemble selon l'une des revendications 3 et 4, dans lequel les moyens d'absorption (9) comportent un module d'absorption bobiné configuré pour mesurer les micro-ondes reçues par ladite bande de frottement (5).

6. Ensemble selon la revendication 5, dans lequel les moyens de génération de micro-ondes (8) sont configurés pour adapter la puissance des micro-ondes générées en fonction des mesures réalisées par les moyens d'absorption (9).

7. Ensemble selon l'une des revendications 2 à 6, dans lequel les moyens de génération de micro-ondes (8) comportent au moins un module d'alimentation (82) et un transformateur d'isolation (83) monté électriquement entre le module de génération (81) et le module d'alimentation (82).

8. Ensemble selon l'une des revendications 2 à 7, dans lequel, le cadre (2) comportant une base (20) et un bras mobile (21) sur lequel est monté l'archet (3), le module de génération (81) est monté sur la base (20) du cadre (2) du pantographe (1).

9. Ensemble selon l'une des revendications 2 à 8, dans lequel, le module de génération s'étend à une hauteur verticale correspondant à une position basse du pantographe (1) afin de dégivrer sa bande de frottement (5).

10. Ensemble selon l'une des revendications 2 à 9, dans lequel, le cadre (2) comportant une base (20) et un bras mobile (21) sur lequel est monté l'archet (3), le module de génération (81) est monté sur le bras mobile (21) du cadre (2) du pantographe (1).

11. Ensemble selon l'une des revendications 2 à 10, dans lequel, la zone d'émission (Z) se présente sous la forme d'un volume conique.

12. Ensemble selon la revendication 11, dans lequel, le volume conique comporte un axe d'émission X s'étendant dans un plan horizontal.

13. Ensemble selon l'une des revendications 1 à 12, dans lequel, les moyens de génération de micro-ondes (8) sont indépendants de la bande de frottement (5).

14. Procédé de dégivrage d'un pantographe (1) comportant un cadre (2) monté à un véhicule ferroviaire (10) et un archet (3), monté sur ledit cadre (2), comportant au moins une bande de frottement (5) adaptée pour capter un courant d'alimentation d'une caténaire (120), le procédé comportant une étape de génération de micro-ondes vers la bande de frottement (5) afin de la dégivrer.

15. Procédé de dégivrage d'un pantographe (1) selon la revendication 14, dans lequel l'étape de génération de micro-ondes vers la bande de frottement (5) est mise en oeuvre avant la montée du pantographe (1) pour capter le courant d'alimentation de la caténaire (120).
